# EUROPÄISCHE PATENTSCHRIFT

(11) **EP 3 723 574 B1**
(45) Veröffentlichungstag und Bekanntmachung des Hinweises auf die Patenterteilung: **20.10.2021**
(21) Anmeldenummer: 18803679.2
(22) Anmeldetag: 19.11.2018
(51) Int. Cl.: A47L 9/12

(54) **FILTERKASSETTE**
FILTER CASSETTE
CARTOUCHE-FILTRE

(30) Priorität: 15.12.2017 EP 17207585
(43) Veröffentlichungstag der Anmeldung: 21.10.2020
(73) Patentinhaber: Hilti Aktiengesellschaft, 9494 Schaan (LI)
(72) Erfinder: HANSLMEIER, Xaver, 87665 Mauerstetten (DE); OHLENORF, Oliver, 86899 Landsberg (DE); PODHORNY, Roman, 71397 Leutenbach (DE)
(74) Vertreter: Hilti Aktiengesellschaft Corporate Intellectual Property
(86) Internationale Anmeldenummer: PCT/EP2018/081698
(87) Internationale Veröffentlichungsnummer: WO 2019/115157

(56) Entgegenhaltungen:
- EP-A2- 1 922 970
- EP-A2- 2 281 497
- CH-A2- 701 532
- US-A1- 2014 034 565

## Beschreibung

Die vorliegende Erfindung betrifft eine Filterkassette für eine Staubsaugvorrichtung, wobei die Filterkassette so in der Staubsaugvorrichtung positionierbar ist, dass die Filterkassette in einem von der Staubsaugvorrichtung angesaugten Luftstrom positionierbar ist, wobei die Filterkassette im Wesentlich eine Mantelfläche, eine obere Öffnung sowie eine untere Öffnung enthält, sodass der angesaugte Luftstrom zum Herausfiltern von Schmutzpartikeln durch die untere Öffnung in die Filterkassette und durch die obere Öffnung aus der Filterkassette strömen kann.

Darüber hinaus betrifft die Erfindung eine Staubsaugvorrichtung mit einer Filterkassettenaufnahme zur Aufnahme einer Filterkassette.

Filterkassetten, die in einer Staubsaugvorrichtung, insbesondere in einem Staubsauger, aufgenommen werden können sind weitestgehend durch den Stand der Technik bekannt. Derartige Filterkassetten enthalten dabei für gewöhnlich einen rechteckigen Rahmen, von dem ein Filterelement gehalten wird. Das Filterelement dient dazu, Schmutzpartikel aus einem Luftstrom, der durch die Staubsaugvorrichtung angesaugt wird, herauszufiltern.

Die aus dem Stand der Technik bekannten Filterkassetten werden gewöhnlicher Weise zwischen einem Auffangbehälter und einem Saugkopf der Staubsaugvorrichtung angeordnet. Der Auffangbehälter dient zum Sammeln von Schmutzpartikel, die aus dem angesaugten Luftstrom herausgefiltert werden, und einem Saugkopf dient zum Erzeugen des angesaugten Luftstroms, mit dem Schmutzpartikel aufgesammelt werden. Eine Filterkassette gemäß des Oberbegriffs des Anspruchs 1 ist durch die EP2281497 A2 offenbart.

Um die Filterkassette an der vorgesehenen Position in der Staubsaugvorrichtung sowie zwischen dem Auffangbehälter und dem Saugkopf anzuordnen, muss bisher der Saugkopf von dem Auffangbehälter getrennt werden. Anschließend wird die Filterkassette in eine Aufnahmeeinrichtung für die Filterkassette positioniert. Die aus dem Stand der Technik bekannten Filterkassetten enthalten ein Abdichtelement, welches das Filterkassette gegenüber der Aufnahmeeinrichtung luftdicht abdichtet, wenn sich die Filterkassette in der Aufnahmeeinrichtung befindet.

Das Anbringen der Filterkassette in der Staubsaugvorrichtung bzw. das Austauschen der Filterkassette ist durch den Stand der Technik bisher umständlich, zeitraubend sowie mühevoll. Darüber hinaus ist die korrekte Positionierung der Filterkassette und insbesondere des Abdichtelements nicht immer zuverlässig gegeben.

Es ist Aufgabe der vorliegenden Erfindung, eine Filterkassette für eine Staubsaugvorrichtung sowie eine Staubsaugvorrichtung mit einer Filterkassettenaufnahme zur Aufnahme einer Filterkassette bereitzustellen, mit der das vorstehend beschriebene Problem gelöst sowie das ordnungsgemäße Anordnen der Filterkassette in der Staubsaugvorrichtung erleichtert und beschleunigt werden kann.

Die Aufgabe wird durch den Gegenstand des unabhängigen Anspruchs 1 und 4 gelöst. Vorteilhafte Ausführungsformen sind in den abhängigen Ansprüchen beschrieben.

Die Aufgabe wird insbesondere gelöst durch eine Filterkassette für eine Staubsaugvorrichtung, wobei die Filterkassette so in der Staubsaugvorrichtung positionierbar ist, dass die Filterkassette in einem von der Staubsaugvorrichtung angesaugten Luftstrom positionierbar ist, wobei die Filterkassette im Wesentlichen eine Mantelfläche, eine obere Öffnung sowie eine untere Öffnung enthält, sodass der angesaugte Luftstrom zum Herausfiltern von Schmutzpartikeln durch die untere Öffnung in die Filterkassette und durch die obere Öffnung aus der Filterkassette strömen kann.

Erfindungsgemäß sind wenigstens ein erstes und zweites Abdichtelement vorgesehen, wobei das erste Abdichtelement in einer ersten Ebene und das zweite Abdichtelement in einer zweiten Ebene verläuft und wobei die ersten und zweite Ebene in einem spitzen Winkel zueinander angeordnet sind, sodass das zweite Abdichtelement im Wesentlichen horizontal ausgerichtet ist, wenn die Filterkassette in einer Filterkassettenaufnahme der Staubsaugvorrichtung positioniert ist, wobei die Filterkassettenaufnahme von außerhalb der Staubsaugvorrichtung zugänglich ist. Hierdurch kann das ordnungsgemäße Anordnen der Filterkassette in der Staubsaugvorrichtung erleichtert und beschleunigt werden kann. Darüber hinaus kann eine optimale Abdichtung der Filterkassette im angesaugten Luftstrom gewährleistet werden.

Entsprechend einer vorteilhaften Ausführungsform der vorliegenden Erfindung kann es möglich sein, dass der spitze Winkel zwischen der ersten und der zweiten Ebene einen Wert von 45° beträgt. Hierdurch kann ein nahezu optimaler Anpressdruck auf das erste und zweite Abdichtelement erzeugt werden.

Gemäß einer vorteilhaften Ausführungsform der vorliegenden Erfindung kann es möglich sein, dass die Filterkassette in einem spitzen Winkel, insbesondere 45°, in einer Einschubrichtung A in die Filterkassettenaufnahme der Staubsaugvorrichtung zum Erreichen einer Endposition einführbar ist, sodass das erste Abdichtelement an einer ersten Anpressfläche der Filterkassettenaufnahme und das zweite Abdichtelement an einer zweiten Anpressfläche der Filterkassettenaufnahme anliegt.

Die im Wesentlichen keilförmige Anordnung des ersten und zweiten Abdichtelements sowie die Anordnung der Filterkassette in einem flachen Winkel in der Filterkassettenaufnahme trägt dazu bei, dass die Filterkassette durch das Eigengewicht der Filterkassette in der Filterkassettenaufnahme der Staubsaugvorrichtung eingeklemmt und damit optimal abgedichtet positioniert ist. Der flache Winkel für die Anordnung der Filterkassette in der Filterkassettenaufnahme bezieht sich auf eine Mittelachse der Filterkassette in Bezug auf die Horizontale.

Des Weiteren wird die Aufgabe gelöst durch eine Staubsaugvorrichtung mit einer Filterkassettenaufnahme zur Aufnahme einer Filterkassette.

Erfindungsgemäß erstreckt sich die Filterkassettenaufnahme im Wesentlichen in einer Mittelebene, welche in einem spitzen Winkel, insbesondere 45°, zu einer Trennebene angeordnet ist.

In den Figuren sind gleiche und gleichartige Komponenten mit gleichen Bezugszeichen beziffert. Es zeigen:
- Fig. 1: eine perspektivische Ansicht auf eine erfindungsgemäße Filterkassette, mit einem ersten und zweiten Abdichtelement;
- Fig. 2: eine seitliche Schnittansicht auf eine erfindungsgemäße Staubsaugvorrichtung mit einem Auffangbehälter, einem Saugkopf, einer Filterkassettenaufnahme und einer erfindungsgemäßen Filterkassette, wobei die Filterkassette sich außerhalb der Staubsaugvorrichtung befindet;
- Fig. 3: eine weitere seitliche Schnittansicht auf die erfindungsgemäße Staubsaugvorrichtung mit dem Auffangbehälter, dem Saugkopf, der Filterkassettenaufnahme und der erfindungsgemäßen Filterkassette, wobei die Filterkassette in der Filterkassettenaufnahme positioniert ist; und
- Fig. 4: eine weitere seitliche Schnittansicht auf die erfindungsgemäße Staubsaugvorrichtung mit dem Auffangbehälter, dem Saugkopf, der Filterkassettenaufnahme und der erfindungsgemäßen Filterkassette, wobei ein durch die Staubsaugvorrichtung angesaugter Luftstrom durch die Filterkassette angedeutet ist.

### Ausführungsbeispiele:

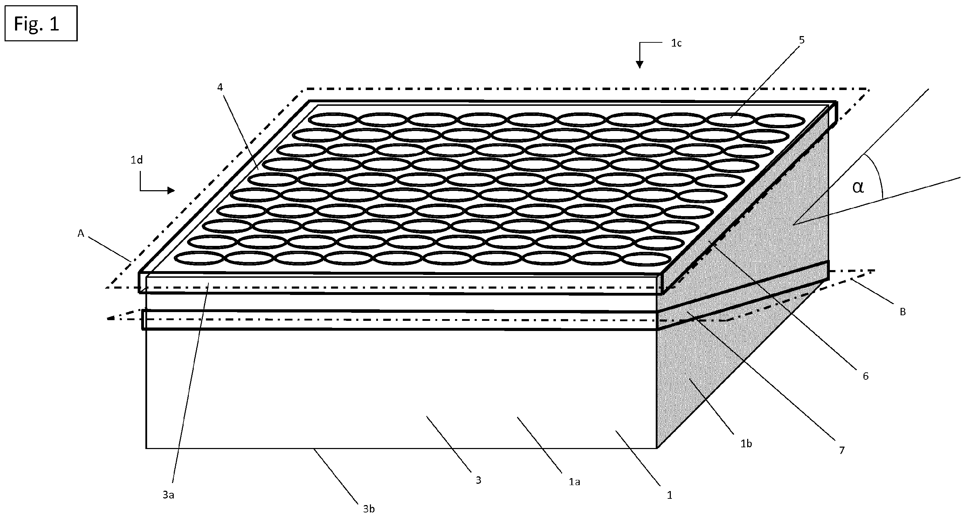

Figur 1 zeigt eine beispielhafte Darstellung einer erfindungsgemäßen Filterkassette 1 für eine Staubsaugvorrichtung 2.

Die Filterkassette 1 enthält eine erste Seitenwand 1a, zweite Seitenwand 1b, dritte Seitenwand 1c und vierte Seitenwand 1d. Die erste, zweite, dritte und vierte Seitenwand 1a, 1b, 1c, 1d bilden zusammen eine die Filterkassette 1 umlaufende Mantelfläche 3. Die Mantelfläche 3 enthält eine obere Seitenkante 3a und eine untere Seitenkante 3b. Sowohl die obere und die untere Seitenkante 3a. 3b umlaufen die Mantelfläche 3. In den Figuren ist die dritte und vierte Seitenwand nicht gezeigt und nur angedeutet.

Des Weiteren umschließt die Mantelfläche 3 einen Hohlraum 4. Der Hohlraum 4 dient dazu, ein Filterelement 5 aufzunehmen und zu halten. Das Filterelement 5 dient zum Herausfiltern bzw. Zurückhalten von Schmutzpartikeln, die sich in einem durch das Filterelement 5 hindurchströmenden Luftstrom LS befinden. Der Luftstrom LS wird durch die Staubsaugvorrichtung 2 erzeugt, die anschließend im Detail beschrieben wird.

Darüber hinaus enthält die Filterkassette 1 ein erstes Abdichtelement 6 und zweites Abdichtelement 7. Sowohl das erste als auch das zweite Abdichtelement 6, 7 sind in Form eines elastischen Abdichtbands ausgestaltet. Das Abdichtband 6, 7 ist dabei aus einem gummiartigen Material hergestellt. Gemäß einer alternativen Ausgestaltungsform können die ersten und zweiten Abdichtelemente 6, 7 auch jede andere mögliche Ausgestaltungsform aufweisen.

Das erste Abdichtelement 6 verläuft an der oberen Seitenkante 3a entlang der Mantelfläche 3. Damit befindet sich das erste Abdichtelement 6 an einem oberen Ende der Filterkassette 1.

Das zweite Abdichtelement 7 verläuft entlang der ersten und dritten Seitenwand 1a, 1c waagerecht bzw. parallel zum ersten Abdichtelement 6. Das zweite Abdichtelement 7 verläuft in einem spitzen Winkel α zu einer Horizontalen entlang der zweiten und vierten Seitenwand 1b, 1d. Das zweite Abdichtelement 7 befindet sich damit in der Nähe der oberen Seitenkante 3a der Filterkassette 1 entlang der ersten Seitenwand 1a. Das zweite Abdichtelement 7 befindet sich in der Nähe der unteren Seitenkante 3b der Filterkassette entlang der dritten Seitenwand 1c. An der zweiten Seitenwand 1b verläuft das zweite Abdichtelement 7 von oben (von der Nähe der oberen Seitenkante 3a) nach unten (in die Nähe der unteren Seitenkante 3b). An der vierten Seitenwand 1d verläuft das zweite Abdichtelement von unten (von der Nähe der unteren Seitenkante 3b) nach oben (in die Nähe der oberen Seitenkante 3a). An der zweiten und vierten Seitenwand 1b, 1d bilden die ersten und zweiten Abdichtelemente 6, 7 zwischen sich jeweils keilförmige Flächen.

Wie in Figur 1 dargestellt verläuft das erste Abdichtelement 6 in einer ersten Ebene A und das zweite Abdichtelement 7 in einer zweiten Ebene B. Die erste und zweite Ebene A, B sind in einem spitzen Winkel von 45° zueinander angeordnet, sodass das zweite Abdichtelement 7 im Wesentlichen horizontal ausgerichtet ist.

Gemäß einer alternativen Ausführungsform kann der Winkel auch größer oder kleiner als 45° sein.

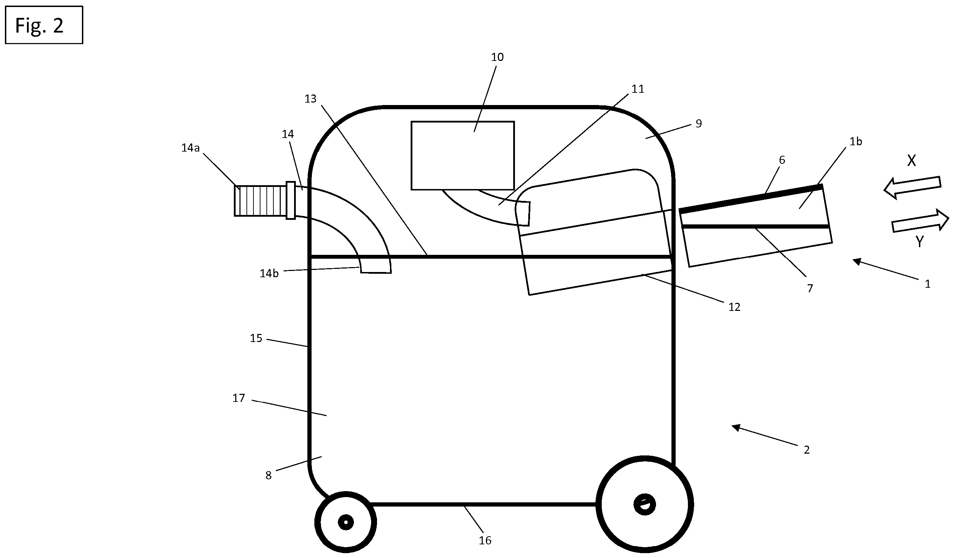

In den Figuren 2 bis 4 ist die Staubsaugvorrichtung 2 gezeigt. Die Staubsaugvorrichtung 2 enthält im Wesentlichen einen Auffangbehälter 8 und einem Saugkopf 9. Der Saugkopf 9 ist lösbar auf dem Auffangbehälter 8 positioniert.

Der Saugkopf 9 enthält eine Turbine 10 zum Erzeugen eines Unterdrucks. Mit Hilfe des Unterdrucks kann Umgebungsluft von außen in das Innere der Staubsaugvorrichtung 2 angesaugt werden. Die Turbine 10 ist über ein Zuleitungsrohr 11 mit einer Filterkassettenaufnahme 12 verbunden. Die Filterkassettenaufnahme 12 weist im Wesentlichen die Form und das Außenvolumen der Filterkassette 1 auf und dient zum Aufnehmen sowie Halten der Filterkassette 1. Des Weiteren ist die Filterkassettenaufnahme 12 zwischen dem Saugkopf 9 und dem Auffangbehälter 8 positioniert. Eine Trennebene 13 verläuft zwischen dem Saugkopf 9 und dem Auffangbehälter 8. Darüber hinaus weist der Saugkopf 9 ein Einlassrohr 14 mit einem ersten Ende 14a und zweiten Ende 14b auf. Das erste Ende 14a des Einlassrohrs 14 befindet sich außerhalb des Saugkopfes 9 und dient zum Aufnehmen und Halten eines Staubsaugerschlauchs. Der Staubsaugerschlauch ist in den Figuren nicht dargestellt. Das zweite Ende 14b des Einlassrohrs 14 weist auf das Innere des Auffangbehälters 8. Durch das zweite Ende 14b des Einlassrohrs 14 strömt die angesaugte Luft LS in das Innere des Auffangbehälters 8.

Der Auffangbehälter 8 enthält im Wesentlichen eine umlaufende Wandfläche 15 und einen Boden 16. Die umlaufende Wandfläche 15 und der Boden 16 bilden einen Hohlraum 17. Der Auffangbehälter 8 dient wiederum zum Auffangen und Halten von Schmutzpartikeln, die mit Hilfe des angesaugten Luftstroms LS aufgesammelt werden. Die Schmutzpartikel sind in den Figuren nicht dargestellt.

Wie in Figur 2 angedeutet, kann die Filterkassette 1 durch eine Öffnung in die Filterkassettenaufnahme 12 (in Richtung X) eingebracht werden. Zum Entfernen der Filterkassette 1 von der Staubsaugvorrichtung 2 wird die Filterkassette 1 in Richtung Y aus der Filterkassettenaufnahme 12 gezogen.

Figur 2 zeigt die Staubsaugvorrichtung 2, wenn sich die Filterkassette 1 außerhalb der Filterkassettenaufnahme 12 befindet.

Gemäß einer alternativen Ausgestaltungsform kann ein Verriegelungsmechanismus an der Öffnung der Filterkassettenaufnahme 12 vorgesehen sein. Der Verriegelungsmechanismus dient zum Arretieren bzw. Eindrücken der Filterkassette 1 in die Filterkassettenaufnahme 12.

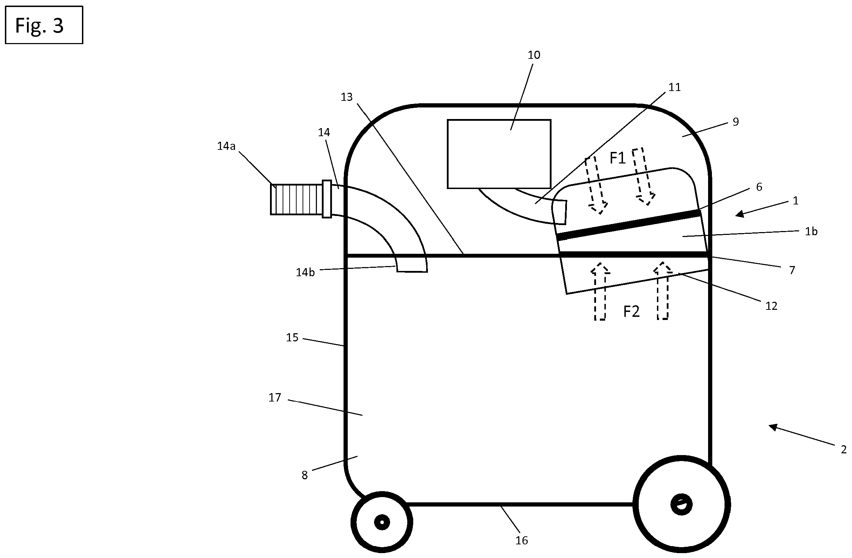

In Figur 3 ist die Staubsaugvorrichtung 2 dargestellt, wenn sich die Filterkassette 1 innerhalb der Filterkassettenaufnahme 12 befindet.

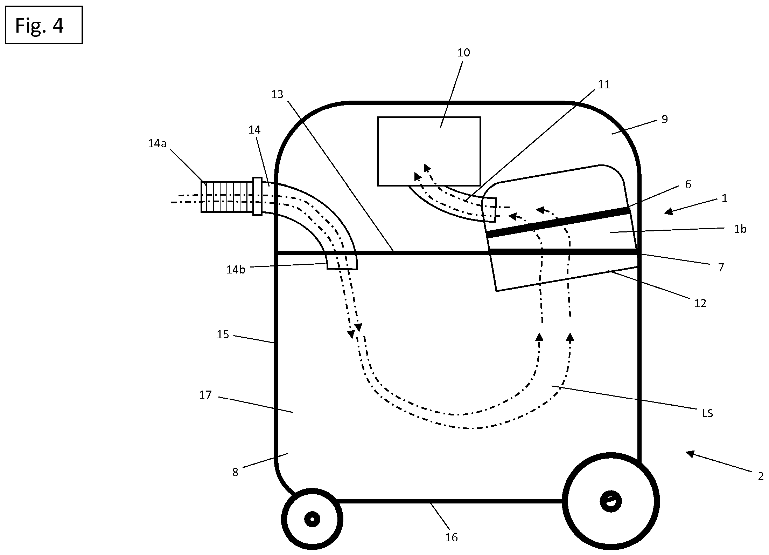

Wenn, wie in Figur 3 und 4 gezeigt, die Filterkassette 1 in der Filterkassettenaufnahme 12 der Staubsaugvorrichtung 2 positioniert ist, liegt die Filterkassette 1 in einem spitzen Winkel α von 45° in der Filterkassettenaufnahme. In dieser Endposition liegt das erste Abdichtelement 6 an einer ersten Anpressfläche 60 der Filterkassettenaufnahme 12 und das zweite Abdichtelement 7 an einer zweiten Anpressfläche 70 der Filterkassettenaufnahme 12 an. Die erste Anpresskraft F1 und die zweite Anpresskraft F2 drücken zum optimalen und luftdichten Abdichten entsprechend auf das erste und zweite Abdichtelement 6, 7 der Filterkassette 1. Durch die schräge Einpassung der Filterkassette 1 in der Filterkassettenaufnahme 12 wirkt die Anpresskraft F1 und die Anpresskraft F2 permanent auf das erste und zweite Abdichtelement 6, 7, wodurch eine optimale Abdichtung der Filterkassette 1 im angesaugten Luftstrom LS gewährleistet ist.

### Übersicht der Bezugszeichen:

- 1: Filterkassette
- 1a: erste Seitenwand 1a
- 1b: zweite Seitenwand 1b
- 1c: dritte Seitenwand 1c
- 1d: vierte Seitenwand
- 2: Staubsaugervorrichtung
- 3: Mantelfläche
- 3a: obere Seitenkante
- 3b: untere Seitenkante
- 4: Hohlraum der Filterkassette
- 5: Filterelement
- 6: erstes Abdichtelement
- 7: zweites Abdichtelement
- 8: Auffangbehälter
- 9: Saugkopf
- 10: Turbine
- 11: Zuleitungsrohr
- 12: Filterkassettenaufnahme
- 13: Trennebene
- 14: Einlassrohr 14
- 14a: erstes Ende des Einlassrohrs 14
- 14b: zweites Ende des Einlassrohrs 14
- 15: umlaufende Wandfläche
- 16: Boden
- 17: Hohlraum des Auffangbehälters
- 60: erste Anpressfläche
- 70: zweite Anpressfläche
- F1: erste Anpresskraft
- F2: zweite Anpresskraft
- LS: angesaugter Luftstrom

## Patentansprüche

1. Filterkassette (1) für eine Staubsaugvorrichtung (2), wobei die Filterkassette (1) so in der Staubsaugvorrichtung (2) positionierbar ist, dass die Filterkassette (1) in einem von der Staubsaugvorrichtung (2) angesaugten Luftstrom positionierbar ist, wobei die Filterkassette (1) im Wesentlichen eine Mantelfläche (3), eine obere Öffnung sowie eine untere Öffnung enthält, sodass der angesaugte Luftstrom zum Herausfiltern von Schmutzpartikeln durch die untere Öffnung in die Filterkassette (1) und durch die obere Öffnung aus der Filterkassette (1) strömen kann,
**dadurch gekennzeichnet, dass** wenigstens ein erstes und zweites Abdichtelement (6, 7) vorgesehen sind, wobei das erste Abdichtelement (6) in einer ersten Ebene und das zweite Abdichtelement (7) in einer zweiten Ebene verläuft und wobei die ersten und zweite Ebene in einem spitzen Winkel zueinander angeordnet sind, sodass das zweite Abdichtelement (7) im Wesentlichen horizontal ausgerichtet ist, wenn die Filterkassette (1) in einer Filterkassettenaufnahme (12) der Staubsaugvorrichtung (2) positioniert ist, wobei die Filterkassettenaufnahme (12) von außerhalb der Staubsaugvorrichtung (2) zugänglich ist.

2. Filterkassette nach Anspruch 1,
**dadurch gekennzeichnet, dass** der spitze Winkel zwischen der ersten und der zweiten Ebene einen Wert von 45° beträgt.

3. Filterkassette nach Anspruch 1 oder 2,
**dadurch gekennzeichnet, dass** die Filterkassette in einem spitzen Winkel, insbesondere 45°, in einer Einschubrichtung A in die Filterkassettenaufnahme der Staubsaugvorrichtung zum Erreichen einer Endposition einführbar ist, sodass das erste Abdichtelement an einer ersten Anpressfläche der Filterkassettenaufnahme und das zweite Abdichtelement an einer zweiten Anpressfläche der Filterkassettenaufnahme anliegt.

4. Staubsaugvorrichtung mit einer Filterkassettenaufnahme zur Aufnahme einer Filterkassette nach wenigstens einem der Ansprüche 1 bis 3,
**dadurch gekennzeichnet, dass** sich die Filterkassettenaufnahme im Wesentlichen in einer Mittelebene erstreckt, welche in einem spitzen Winkel, insbesondere 45°, zu einer Trennebene angeordnet ist.

## Claims

1. Filter cassette (1) for a vacuum cleaner apparatus (2), it being possible for the filter cassette (1) to be positioned in the vacuum cleaner apparatus (2) in such a way that the filter cassette (1) can be positioned in an air stream which is sucked in by the vacuum cleaner apparatus (2), the filter cassette (1) comprising substantially a shell face (3), an upper opening and a lower opening, with the result that the air stream which is sucked in can flow through the lower opening into the filter cassette (1) and through the upper opening out of the filter cassette (1) in order to filter out the dirt particles, **characterized in that** at least one first and second sealing element (6, 7) are provided, the first sealing element (6) running in a first plane and the second sealing element (7) running in a second plane, and the first and second plane being arranged at an acute angle with respect to one another, with the result that the second sealing element (7) is oriented substantially horizontally when the filter cassette (1) is positioned in a filter cassette receptacle (12) of the vacuum cleaner apparatus (2), the filter cassette receptacle (12) being accessible from outside the vacuum cleaner apparatus (2).

2. Filter cassette according to Claim 1, **characterized in that** the acute angle between the first and the second plane is a value of 45°.

3. Filter cassette according to Claim 1 or 2, **characterized in that** the filter cassette can be introduced at an acute angle, in particular 45°, in a push-in direction A into the filter cassette receptacle of the vacuum cleaner apparatus in order to reach an end position, with the result that the first sealing element bears against a first pressing face of the filter cassette receptacle and the second sealing element bears against a second pressing face of the filter cassette receptacle.

4. Vacuum cleaner apparatus with a filter cassette receptacle for receiving a filter cassette according to at least one of Claims 1 to 3, **characterized in that** the filter cassette receptacle extends substantially in a central plane which is arranged at an acute angle, in particular 45°, with respect to a dividing plane.

## Revendications

1. Cartouche-filtre (1) pour un dispositif aspirateur (2), la cartouche-filtre (1) pouvant être positionnée dans le dispositif aspirateur (2) de telle sorte que la cartouche-filtre (1) peut être positionnée dans un flux d'air aspiré par le dispositif aspirateur (2), la cartouche-filtre (1) comprenant substantiellement une surface latérale (3), une ouverture supérieure ainsi qu'une ouverture inférieure de sorte que le flux d'air aspiré pour extraire des particules de saleté peut circuler à travers l'ouverture inférieure pour entrer dans la cartouche-filtre (1) et peut circuler par l'ouverture supérieure pour sortir de la cartouche-filtre (1),
**caractérisée en ce qu'**au moins un premier et un deuxième élément d'étanchéité (6, 7) sont prévus, le premier élément d'étanchéité (6) s'étendant dans un premier plan et le deuxième élément d'étanchéité (7) s'étendant dans un deuxième plan, et les premier et deuxième plans étant disposés selon un angle aigu l'un par rapport à l'autre de sorte que le deuxième élément d'étanchéité (7) est aligné de manière substantiellement horizontale lorsque la cartouche-filtre (1) est positionnée dans un logement de cartouche-filtre (12) du dispositif aspirateur (2), le logement de cartouche-filtre (12) étant accessible de l'extérieur du dispositif aspirateur (2).

2. Cartouche-filtre selon la revendication 1, **caractérisée en ce que** l'angle aigu entre le premier et le deuxième plan présente une valeur de 45°.

3. Cartouche-filtre selon la revendication 1 ou 2, **caractérisée en ce que** la cartouche-filtre peut être introduite selon un angle aigu, en particulier de 45°, dans une direction d'insertion A dans le logement de cartouche-filtre du dispositif aspirateur pour atteindre une position d'extrémité de sorte que le premier élément d'étanchéité est adjacent à une première surface d'appui du logement de cartouche-filtre et le deuxième élément d'étanchéité est adjacent à une deuxième surface d'appui du logement de cartouche-filtre.

4. Dispositif d'aspirateur comprenant un logement de cartouche-filtre pour recevoir une cartouche-filtre selon au moins l'une des revendications 1 à 3, **caractérisé en ce que** le logement de cartouche-filtre s'étend substantiellement dans le plan central qui est disposé selon un angle aigu, en particulier de 45°, par rapport à un plan de séparation.
